# EUROPEAN PATENT APPLICATION

(11) **EP 2 720 447 A1**
(43) Date of publication of application: **16.04.2014**
(21) Application number: 12796307.2
(22) Date of filing: 24.04.2012
(51) Int. Cl.: H04M 1/73, G06F 3/041, H04M 1/725

(54) **ELECTRONIC DEVICE, OPERATION CONTROL METHOD, AND PROGRAM**

(30) Priority: 08.06.2011 JP 2011127966
(71) Applicant: NEC CASIO Mobile Communications, Ltd., Kawasaki-shi, Kanagawa 211-8666 (JP)
(72) Inventor: NAKAMURA, Futoshi, Kawasaki-shi Kanagawa 211-8666 (JP)
(74) Representative: Vossius & Partner
(86) International application number: PCT/JP2012/002794
(87) International publication number: WO 2012/169109

(57) **Abstract**

[PROBLEM TO BE SOLVED] Reduction of wasteful power consumption can be easily realized without impairing the usability for a user and without requiring complicated control.

[SOLUTION] When a user performs a closing operation of a touch screen slide type cellular phone and the closing operation is performed in a state where the touch screen 1 is contacted, a CPU 6 continuously puts a display 2 and the touch screen 1 into an ON state, which continuously allows touch operations on the touch screen 1. In contrast, when the closing operation is made without the user's physical contact with the touch screen 1, the CPU 6 continuously puts the display 2 and the touch screen 1 into an OFF state.

## Description

### TECHNICAL FIELD

The present invention relates to an electronic device, an operation control method and a program.

### BACKGROUND ART

In recent years, as is described in Patent Documents 1 and 2, portable terminal apparatuses which include a display equipped with a touch screen have been widespread. A user touches the touch screen on the display so as to input numerical numbers and characters and instructs the operations, in addition to key operations or in place of the key operations.

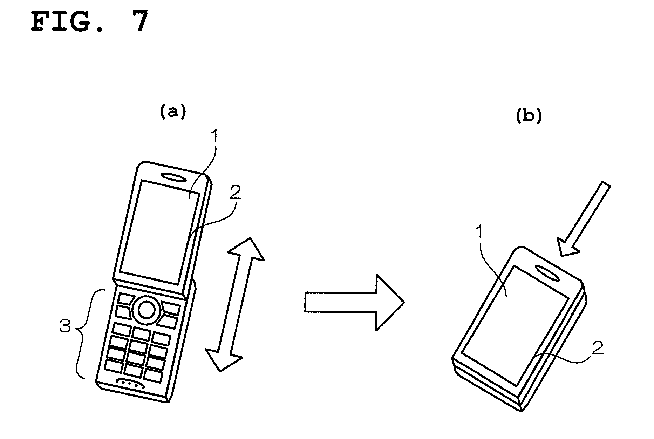

FIG. 7 (a) and 7 (b) are perspective views of the external configuration of a slide type cellular phone. In the diagrams, a reference number 1 represents a touch screen, and a reference number 2 represents a display, and a reference number 3 represents a key operating section. In FIG. 7 (a) and 7 (b), the touch screen 1 and the display 2 are disposed at the same position relative to each other. Similarly, a backlight (not illustrated) is provided in the display 2. As is described in FIG. 7 (a), the display 2 is slidable in the direction of an arrow. When an open operation is carried out, and the display 2 is put into an open state, an input operation by means of the key operating section 3 is available. Similarly, as is illustrated in FIG. 7 (b), when a closing operation is carried out, and the display 2 is covered with the key operating section 3 and put into a closed state, a touch operation by means of the touch screen 1 is available.

Incidentally, with respect to the portable terminal apparatus which includes the touch screen 1, and which includes the slide type cellular phone above, the touch operation on the touch screen 1 is made while the display 2 is displayed, so it is important how the power consumption is suppressed.

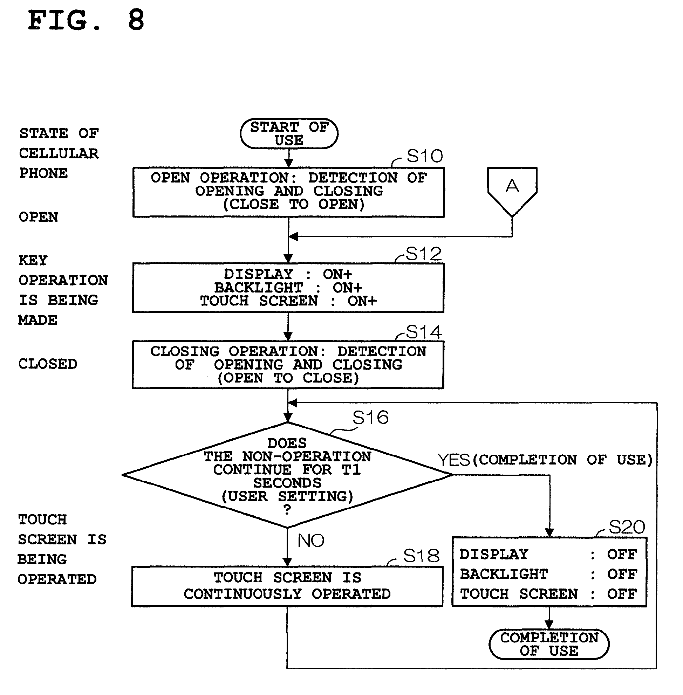

FIG. 8 is a flowchart illustrating the operation of the slide type cellular phone. When a user starts using the slide type cellular phone, and the open operation is made, the open state is detected (Step S10), the display 2 (backlight) and the touch screen 1 are turned into ON+ (ON continuation) (Step S12). In this case, the user carries out the operation with the key operating section 3.

Similarly, when the user carries out the closing operation, the closed state is detected (Step S14). In this case, it is judged whether or not a non-operation is made during a period of T1 seconds which are set by the user in advance (Step S16). When any operation is made in the closed state, the display 2 (backlight) and the touch screen 1 are put into ON+ (ON continuation), so that the user operates the slide type cellular phone with the touch screen 1 (Step S18). Then, when the non-operation in the closed state is continued during the period of T1 seconds which are set by the user in advance, the display 2 (backlight) and the touch screen 1 are turned off (Step S20).

### PRIOR ART DOCUMENTS

### PATENT DOCUMENTS

Patent Document 1: JP 2009-157809
Patent Document 2: JP 2011-023795

### SUMMARY OF INVENTION

### Problem to be Solved by the Invention

However, in the technology disclosed by the aforementioned Patent Document 1, for example, when the user stops the use of the slide type cellular phone after carrying out the closing operation and puts the slide type cellular phone into a pocket, a bag, and the like, the display 2 (backlight) and the touch screen 1 are turned off after the lapse of the T1 seconds which are set by the user in advance. Accordingly, there is a problem in that power is wastefully consumed during the period of the T1 seconds.

Similarly, when the user sets the aforementioned T1 seconds which are set by the user in advance, to zero second in order to prevent wasteful power consumption, and when the user desires the continuous use of the slide type cellular phone based on the operation of the touch screen 1 after the closing operation, the display 2 (backlight) and the touch screen 1 are immediately turned off. Accordingly, there is a problem in that the usability for the user is substantially deteriorated.

Further, in this case, a certain additional operation is required for the user, so as to turn on the display 2 (backlight) and the touch screen 1 for the purpose of the user' s continuous use of the slide type cellular phone. For example, it is conceivable that a side key is pressed, or that the touch screen 1 is brought into contact again. In the case of the latter, only the power source of the touch screen 1 is not immediately turned off, but the power source needs to be continuously turned on for a certain period of time, so that there is a problem in that complicated control is required.

Therefore, it is an object of the present invention to provide an electronic device, an operation control method and a program which can easily realize the reduction of wasteful power consumption without impairing the usability for a user and without requiring complicated control.

### Means for Solving the Problem

An electronic device of the present invention, comprising:
a case configured to be changeable in shape;
a shape change detecting section configured to detect a change in shape of the case;
a display section configured to display so that visual recognition is possible irrespective of the shape of the case;
an input detecting section configured to detect input, irrespective of the shape of the case; and
a control section configured to control operations of the display section or the input detecting section, or the operations of the display section and the input detecting section, after the change in shape of the case, based on detection information of the input detecting section when the change in shape of the case is detected by the shape change detecting section.

An operation control method in an electronic device including a case that is changeable in shape, a display section configured to display so that visual recognition is possible irrespective of the shape of the case, and an input detecting section configured to detect input irrespective of the shape of the case, the operation control method comprising:
a shape change detecting step for detecting the change in shape of the case;
an input presence-and-absence detecting step for detecting presence and absence of the input to the input detecting section when the change in shape of the case is detected in the shape change detecting step; and
a controlling step for controlling operations of the display section or the input detecting section, or the operations of the display section and the input detecting section, after the change in shape of the case, based on detection results in the input presence-and-absence detecting step.

A program to be executed by a computer of an electronic device including a case configured to be changeable in shape, a display section configured to display so that visual recognition is possible irrespective of the shape of the case, and an input detecting section configured to detect input irrespective of the shape of the case, the program comprising:
a shape change detecting function for detecting the change in shape of the case;
an input presence-and-absence detecting function for detecting presence and absence of the input to the input detecting section when the change in shape of the case is detected by the shape change detecting function; and
a control function for controlling operations of the display section or the input detecting section, or the operations of the display section and the input detecting section after the change in shape of the case, based on detection results by the input presence-and-absence detecting function.

### Effect of the Invention

According to one aspect of the present invention, the reduction of wasteful power consumption can easily be realized without impairing the usability for a user and without requiring complicated control.

### BRIEF DESCRIPTION OF DRAWINGS

FIG. 1 is a perspective view illustrating the external configuration of a slide type cellular phone according to the embodiment of the present invention.
FIG. 2 is a block diagram illustrating the configuration of the slide type cellular phone according to the embodiment of the present invention.
FIG. 3 is a perspective view of the slide type cellular phone in use in an open state according to the embodiment of the present invention.
FIG. 4 is a perspective view of the slide type cellular phone in use in a closed state according to the embodiment of the present invention.
FIG. 5 is perspective views illustrating a case where the slide type cellular phone is in the closed state, without the user's physical contact with the touch screen 1.
FIG. 6 is a flowchart to describe the operation of the slide type cellular phone according to the embodiment of the present invention.
FIG. 7 is perspective views illustrating the external configuration of the slide type cellular phone.
FIG. 8 is a flowchart to describe the operation of the slide type cellular phone.
FIG. 9 is a configuration diagram of Supplementary Note 1.

### DESCRIPTION OF EMBODIMENTS

Hereinafter, the embodiment of the present invention will be described referring to the drawings.

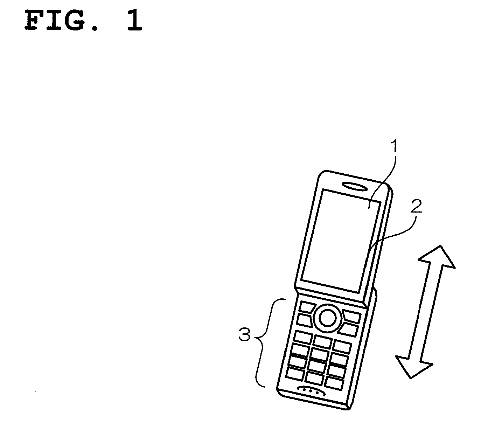

FIG. 1 is a perspective view illustrating the external configuration of a slide type cellular phone of the embodiment of the present invention. The external configuration of the slide type cellular phone of the embodiment of the present invention is the same as that of a slide type cellular phone illustrated in FIG. 7, so its description is omitted, and the same reference numbers are applied. The touch screen 1 may be of a contact detection type which detects direct contact or of a proximity detection type which detects the close proximity of a finger and the like. Similarly, the touch screen 1, a display 2, and a backlight 4 can be separately ON/OFF controlled.

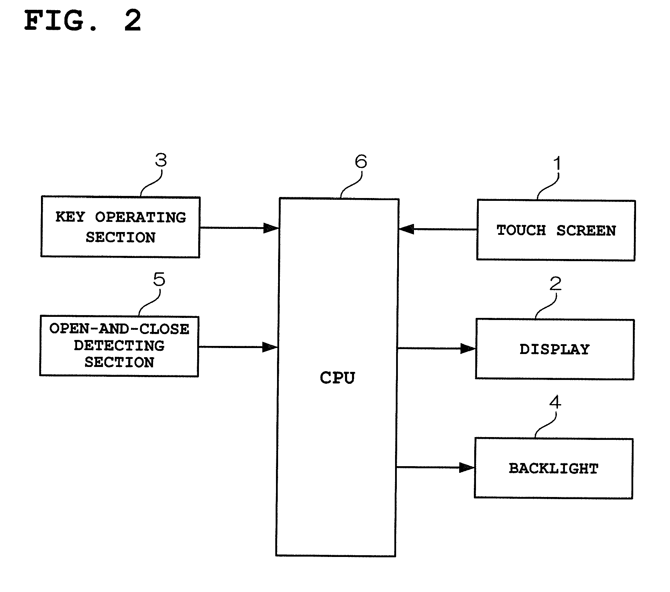

FIG. 2 is a block diagram illustrating the configuration of the slide type cellular phone of the embodiment of the present invention. The same reference numbers are applied for portions corresponding to FIG. 1, and its description is omitted. A reference number 4 represents a backlight which illuminates the display 2. A reference number 5 represents an open-and-close detecting section which detects the opening and closing of the display 2. A reference number 6 represents a CPU which controls the backlight 4 and the open-and-close detecting section 5.

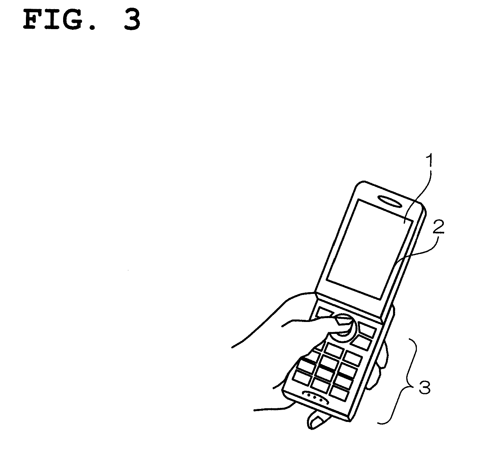

FIG. 3 is a perspective view of the slide type cellular phone in use in an open state according to the embodiment of the present invention. When a user operates the slide type cellular phone in the open state, which is aimed at operating the key operating section 3, the user puts the touch screen 1 into an OFF state in order to reduce wasteful power consumption. Similarly, the user operates the key operating section 3 while watching the display 2, so that the display 2 and the backlight 4 are continuously put into the ON state (hereinafter referred to as "ON+") during the continuous non-operation in the seconds which are set by the user in advance.

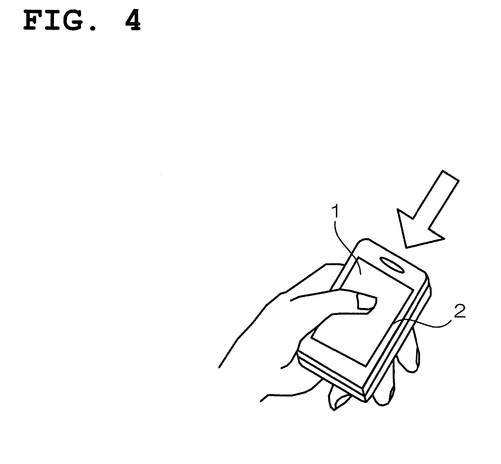

FIG. 4 is a perspective view of the slide type cellular phone in use in a closed state according to the embodiment of the present invention. When the slide type cellular phone is put into the closed state, and the user contacts with the touch screen 1, the touch screen 1, the display 2, and the backlight 4 are turned into ON+. Accordingly, the user can continuously operate the touch screen 1 after the slide type cellular phone is closed.

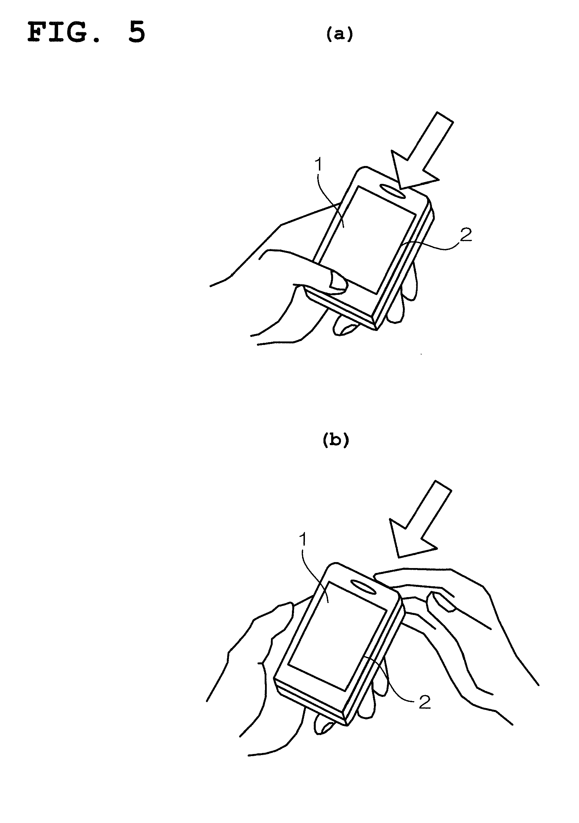

FIG. 5 (a) and (b) are perspective views in a case where the slide type cellular phone is put into the closed state without the user's physical contact with the touch screen 1. FIG. 5 (a) illustrates a state where the user puts his thumb of his left hand to a case portion on the periphery of the display 2 and slides his thumb in the direction of an arrow, so as to put the slide type cellular phone into the closed state. Similarly, FIG. 5 (b) illustrates a state where the user holds the slide type cellular phone with his left hand and slides the case on the side of the display 2 with his right hand in the direction of the arrow, so as to put the slide type cellular phone into the closed state, without physical contact with the touch screen 1 (display 2).

In the embodiment of the present invention, as is illustrated in FIGs. 5 (a) and (b), in either case where the slide type cellular phone is put into the closed state without the user' s physical contact with the touch screen 1, the touch screen 1, the display 2, and the backlight 4 are turned off. Accordingly, when the user stops using the slide type cellular phone, the user can put the slide type cellular phone into a pocket, a bag or the like, without wasteful power consumption after the slide type cellular phone is closed. Incidentally, herein, the touch screen 1, the display 2, and the backlight 4 are turned off, but all are not required to be turned off. However, any one or any combined two, out of the touch screen 1, the display 2, and the backlight 4, may be turned off.

Next, the operation of the aforementioned embodiment will be described.

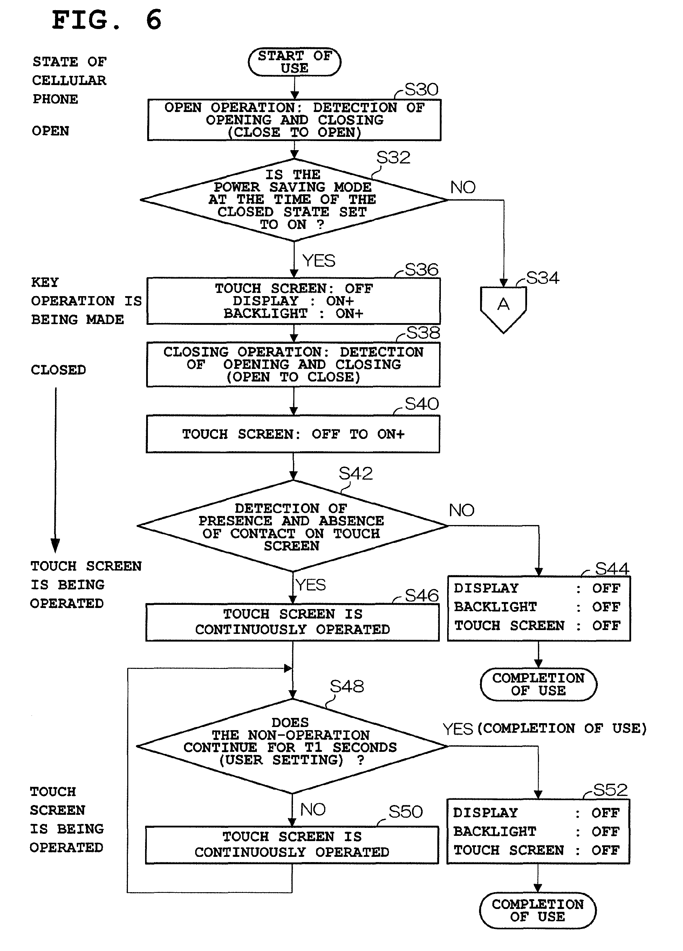

FIG. 6 is a flowchart to describe the operation of the slide type cellular phone of the embodiment of the present invention. When the user starts using the slide type cellular phone and carries out the open operation, the open-and-close detecting section 5 detects the open state (Step S30). The CPU 6 judges whether or not a power saving mode at the time of the closed state is set to ON (Step S32). Then, when the power saving mode at the time of the closed state is not set to ON, as is the same case with the aforementioned conventional technology, the operations of the Step S12 afterwards, which are illustrated in FIG. 8, are executed (Step S34).

In contrast, when the power saving mode at the time of the closed state is set to ON, the display 2 and the backlight 4 are put into ON+ (Step S36). At this time, the user operates the slide type cellular phone by means of the key operating section 3, without using the touch screen 1 (see FIG. 3). That is, the touch screen 1 is turned off, so that wasteful power consumption can be reduced.

Herein, when the user carries out the closing operation, that is, at a time point when the sliding of the display 2 is started, the open-and-close detecting section 5 detects the closed state (Step S38), and the touch screen 1 is turned into ON+ (Step S40). At this time, the CPU 6 judges whether or not the finger of the user comes in contact with the touch screen 1 (Step S42).

Then, when the finger of the user does not come in contact with the touch screen 1 (Step S42, NO), the display 2 and the backlight 4 are immediately turned off, and the touch screen 1 is also turned off accordingly (Step S44: see FIGs. 5 (a) and 5 (b). The user stops using the slide type cellular phone and puts the slide type cellular phone into his pocket, a bag or the like. Accordingly, after the user stops using the slide type cellular phone, electric power is not wastefully consumed. Incidentally, herein, the touch screen 1, the display 2, and the backlight 4 are turned off, but all are not required to be turned off. However, any one or any combined two, out of the touch screen 1, the display 2, and the backlight 4, may be turned off.

In contrast, when the finger of the user comes in contact with the touch screen 1 (Step S42, YES), the user continuously operates the slide type cellular phone by means of the touch screen 1 (see FIG. 4). In this time, the display 2, the backlight 4, and the touch screen 1 are put into ON+ (continuation).

In this case, it is judged whether or not the non-operation is continued for the period of T1 seconds which are set by the user in advance (Step S48). When any operation with regards to the touch screen 1 in the closed state is made (Step S48, NO), the display 2, the backlight 4, and the touch screen 1 are put into ON+ (ON continuation), and the user continuously operates the slide type cellular phone by means of the touch screen 1 (Step S50).

In contrast, when a non-operational state with regards to the touch screen 1 in the closed state is continued during the period of T1 seconds which are set by the user in advance (Step S48, YES), the display 2, the backlight 4 and the touch screen 1 are turned off (Step S52). Incidentally, herein, the touch screen 1, the display 2, and the backlight 4 are turned off, but all are not required to be turned off. However, any one or any combined two, out of the touch screen 1, the display 2, and the backlight 4, may be turned off.

According to the aforementioned embodiment of the present invention, when the user carries out the closing operation of a touch screen slide type cellular phone and the closing operation is made in a state where the touch screen 1 is contacted, the display 2, the backlight 4 and the touch screen 1 are continuously put into an ON state, which continuously allows the touch operation on the touch screen 1. In contrast, when the closing operation is made in a state where the touch screen 1 is not contacted, the display 2, the backlight 4 and the touch screen 1 are continuously put into an OFF state.

Accordingly, this properly distinguishes between a case where the touch screen 1 continuously used and a case where the slide type cellular phone is put into a pocket, a bag and the like as it is, without impairing the usability for the user and requiring the complicated control, and the reduction of wasteful power consumption of the touch screen slide type cellular phone can readily be realized.

In the aforementioned embodiment of the present invention, the cellular phones are exemplified. However, the present invention is not limited to the cellular phone and smart phones and can be applied to other devices (for example, game machines, tablet personal computers, and notebook personal computers).

In the aforementioned embodiment of the present invention, ON/OFF control of the touch screen 1, the display 2, and the backlight 4 has been described. There has been known a cellular phone in which its key top is lighted from the back surface of the key operating section 3 in order to carry out the key operation even in the dark. In this case, the backlight of the key operating section 3 may be ON/OFF controlled when the user carries out the open operation or the closing operation of the touch screen slide type cellular phone.

Similarly, in the aforementioned embodiment of the present invention, the slide type cellular phone has been described. However, the present invention is not limited to the slide type cellular phone. The present invention can be applied to a collapsible type, that is, a collapsible type which is made up of a first case including an operating section such as a key, and a second case including a display section such as liquid crystal, and the display section includes a touch screen, and further, the collapsible type has a collapsible shape in which the display section is rotated and externally exposed (also referred to as "rotary biaxial hinge type" which includes two axes, which are a rotation axis to be folded and a rotation axis used for rotating the display section). Similarly, the present invention can be applied to a rotation type which includes the touch screen.

Hereinafter, the features of the present invention will be described.

Part or the entire aforementioned embodiment of the present invention can be described below. However, the present invention is not limited to the description below.

### (Supplementary Note 1)

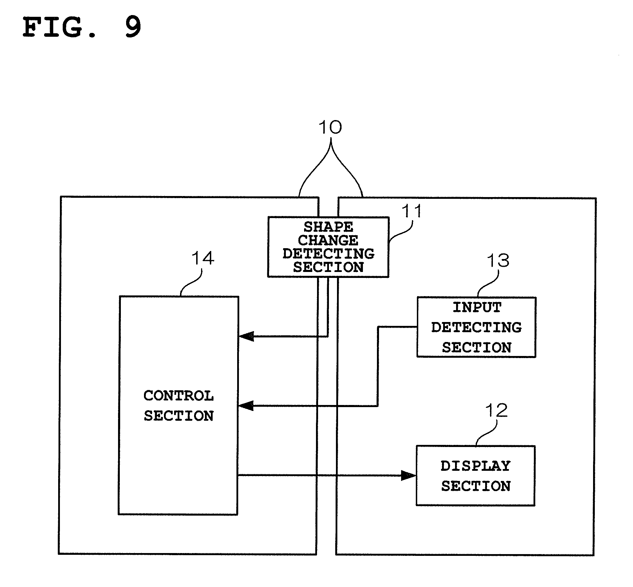

FIG. 9 is a configuration diagram of Supplementary Note 1. As shown in this diagram, the invention of Supplementary Note 1 describes:

An electronic device comprising:
a case 10 configured to be changeable in shape,
a shape change detecting section 11 configured to detect a change in shape of the case 10,
a display section 12 configured to display so that visual recognition is possible irrespective of the shape of the case 10, and
an input detecting section 13 configured to detect input, irrespective of the shape of the case 10,
a control section 14 configured to control operations of the display section 12 or the input detecting section 13, or the operations of the display section 12 and the input detecting section 13, after the change in shape of the case 10, based on detection information of the input detecting section 13 when the change in shape of the case 10 is detected by the shape change detecting section 11.

### (Supplementary Note 2)

The electronic device according to Supplementary Note 1, wherein, when the shape change detecting section detects the change in shape of the case, and when the input detecting section configured to detect the input, the control section operates the display section or the input detecting section, or operates the display section and the input detecting section, after the change in shape of the case, and
wherein, when the shape change detecting section detects the change in shape of the case, and when the input detecting section does not detect the input, the control section stops the operations of the display section or the input detecting section, or the operations of the display section and the input detecting section, after the change in shape of the case.

### (Supplementary Note 3)

The electronic device according to Supplementary Notes 1 or 2, wherein when the input detecting section does not detect input of a predetermined time, the control section stops the operations of the display section or the detecting section, or the operations of the display section and the detecting section.

### (Supplementary Note 4)

The electronic device according to any one of Supplementary Notes 1 to 3, wherein the display section comprises a backlight, and
wherein the control section further controls operations of the backlight.

### (Supplementary Note 5)

The electronic device according to any one of Supplementary Notes 1 to 4, wherein the input detecting section is a touch screen of a contact detecting type or a proximity detection type formed on the display section.

### (Supplementary Note 6)

An operation control method in an electronic device including a case that is changeable in shape, a display section configured to display so that visual recognition is possible irrespective of the shape of the case, and an input detecting section configured to detect input irrespective of the shape of the case, the operation control method comprising:
a shape change detecting step for detecting the change in shape of the case;
an input presence-and-absence detecting step for detecting presence and absence of the input to the input detecting section when the change in shape of the case is detected in the shape change detecting step; and
a controlling step for controlling operations of the display section or the input detecting section, or the operations of the display section and the input detecting section, after the change in shape of the case, based on detection results in the input presence-and-absence detecting step.

### (Supplementary Note 7)

A program to be executed by a computer of an electronic device including a case configured to be changeable in shape, a display section configured to display so that visual recognition is possible irrespective of the shape of the case, and an input detecting section configured to detect input irrespective of the shape of the case, the program comprising:
a shape change detecting function for detecting the change in shape of the case;
an input presence-and-absence detecting function for detecting presence and absence of the input to the input detecting section when the change in shape of the case is detected by the shape change detecting function; and
a control function for controlling operations of the display section or the input detecting section, or the operations of the display section and the input detecting section after the change in shape of the case, based on detection results by the input presence-and-absence detecting function.

### DESCRIPTION OF REFERENCE NUMERALS

1 touch screen
2 display
3 key operating section
4 backlight
5 open-and-close detecting section
6 CPU

## Claims

1. An electronic device comprising:
a case configured to be changeable in shape;
a shape change detecting section configured to detect a change in shape of the case;
a display section configured to display so that visual recognition is possible irrespective of the shape of the case;
an input detecting section configured to detect input, irrespective of the shape of the case; and
a control section configured to control operations of the display section or the input detecting section, or the operations of the display section and the input detecting section, after the change in shape of the case, based on detection information of the input detecting section when the change in shape of the case is detected by the shape change detecting section.

2. The electronic device according to claim 1, wherein, when the shape change detecting section detects the change in shape of the case, and when the input detecting section configured to detect the input, the control section operates the display section or the input detecting section, or operates the display section and the input detecting section, after the change in shape of the case, and
wherein, when the shape change detecting section detects the change in shape of the case, and when the input detecting section does not detect the input, the control section stops the operations of the display section or the input detecting section, or the operations of the display section and the input detecting section, after the change in shape of the case.

3. The electronic device according to claim 1 or 2, wherein, when the input detecting section does not detect input of a predetermined time, the control section stops the operations of the display section or the detecting section, or the operations of the display section and the detecting section.

4. The electronic device according to any one of claims 1 to 3, wherein the display section comprises a backlight, and
wherein the control section further controls operations of the backlight.

5. The electronic device according to any one of claims 1 to 4, wherein the input detecting section is a contact detecting type or a proximity detection type touch screen provided on the display section.

6. An operation control method in an electronic device including a case that is changeable in shape, a display section configured to display so that visual recognition is possible irrespective of the shape of the case, and an input detecting section configured to detect input irrespective of the shape of the case, the operation control method comprising:
a shape change detecting step for detecting the change in shape of the case;
an input presence-and-absence detecting step for detecting presence and absence of the input to the input detecting section when the change in shape of the case is detected in the shape change detecting step; and
a controlling step for controlling operations of the display section or the input detecting section, or the operations of the display section and the input detecting section, after the change in shape of the case, based on detection results in the input presence-and-absence detecting step.

7. A program to be executed by a computer of an electronic device including a case configured to be changeable in shape, a display section configured to display so that visual recognition is possible irrespective of the shape of the case, and an input detecting section configured to detect input irrespective of the shape of the case, the program comprising:
a shape change detecting function for detecting the change in shape of the case;
an input presence-and-absence detecting function for detecting presence and absence of the input to the input detecting section when the change in shape of the case is detected by the shape change detecting function; and
a control function for controlling operations of the display section or the input detecting section, or the operations of the display section and the input detecting section after the change in shape of the case, based on detection results by the input presence-and-absence detecting function.
